(19) Europäisches Patentamt
European Patent Office
Office européen des brevets

(11) **EP 2 628 717 A1**

(12) **EUROPEAN PATENT APPLICATION**
published in accordance with Art. 153(4) EPC

(43) Date of publication:
**21.08.2013 Bulletin 2013/34**

(51) Int Cl.:
**C04B 38/00** *(2006.01)*

(21) Application number: **11832302.1**

(86) International application number:
**PCT/JP2011/005763**

(22) Date of filing: **14.10.2011**

(87) International publication number:
**WO 2012/049858 (19.04.2012 Gazette 2012/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2011 JP 2011154567**
**14.10.2010 JP 2010231303**

(71) Applicant: **Nichias Corporation**
**Tokyo 105-8555 (JP)**

(72) Inventors:
• **YONAIYAMA, Ken**
**Tokyo 105-8555 (JP)**
• **ISHIHARA, Tetsuya**
**Tokyo 105-8555 (JP)**
• **KISHIKI, Tomohiko**
**Tokyo 105-8555 (JP)**

(74) Representative: **Liebetanz, Michael**
**Isler & Pedrazzini AG**
**Postfach 1772**
**8027 Zürich (CH)**

(54) **INORGANIC FIBER MOLDED ARTICLE, METHOD FOR PRODUCING SAME, AND HEATING EQUIPMENT**

(57) An inorganic fibrous shaped body including partially-crystallized bio-soluble inorganic fibers and an inorganic binder, wherein the bio-soluble inorganic fibers are $SiO_2/MgO$ fibers or $SiO_2/CaO$ fibers having the following composition: [$SiO_2/MgO$ fibers] $SiO_2$ 66 to 82 wt% CaO 1 to 9 wt% MgO 10 to 30 wt% $Al_2O_3$ 3 wt% or less [$SiO_2/CaO$ fibers] $SiO_2$ 66 to 82 wt% CaO 10 to 34 wt% MgO 3 wt% or less $Al_2O_3$ 5 wt% or less.

FIG. 5

| Heating temperature at the time of measurement | Amount of curvature (mm) | | | | | |
|---|---|---|---|---|---|---|
| | Untreated fibers A | Fibers A treated at 800°C for 5 min | Fibers A treated at 850°C for 5 min | Fibers A treated at 850°C for 10 min | Fibers A treated at 900°C for 5 min | Fibers A treated at 900°C for 10 min |
| 300°C | 1.0 | 0.7 | 0.5 | 0.0 | 0.0 | 0.0 |
| 400°C | 2.0 | 0.7 | 0.5 | 0.0 | 0.0 | 0.0 |
| 500°C | 2.5 | 1.0 | 1.0 | 0.0 | 0.5 | 0.0 |
| 600°C | 3.3 | 1.2 | 1.0 | 0.5 | 1.0 | 0.5 |
| 700°C | 3.0 | 2.0 | 2.1 | 1.6 | 1.9 | 1.4 |
| 800°C | 3.0 | 3.9 | 2.8 | 2.2 | 2.0 | 1.3 |
| 900°C | 1.5 | 3.1 | 1.7 | 1.6 | 1.8 | 1.8 |

EP 2 628 717 A1

**Description**

**TECHNICAL FIELD**

The invention relates to an inorganic fibrous shaped body, a production method thereof and heating equipment. In particular, the invention relates to suppression of deformation of an inorganic fibrous shaped body containing bio-soluble inorganic fibers caused by heating.

**BACKGROUND ART**

An inorganic fibrous shaped body comprising inorganic fibers and a binder is light in weight, easy to handle, and excellent in heat resistance. Therefore, it is used as a heat-insulating material in an industrial furnace, for example. On the other hand, in recent years, a problem has been pointed out that inorganic fibers are inhaled by a human body and the inhaled fibers invade the lung to cause disorders.

Under such circumstances, bio-soluble inorganic fibers which do not cause or hardly cause disorders even if inhaled by a human body have been developed (Patent Document 1, for example).

**RELATED ART DOCUMENTS**

**PATENT DOCUMENTS**

Patent Document 1: JP-A-2008-162853

**SUMMARY OF THE INVENTION**

However, conventionally, if an inorganic fibrous shaped body containing bio-soluble inorganic fibers is used under heating, deformation such as curving, shrinkage or the like may cause easily in the inorganic fibrous shaped body.

As for one of the causes of such deformation, as compared with non-bio-soluble inorganic fibers such as alumina fibers, bio-soluble inorganic fibers tend to be shrunk easily or tend to suffer heat creep easily when heated due to the presence of MgO or CaO, for example.

The invention has been made in view of the above-mentioned subject, and an object thereof is to provide an inorganic fibrous shaped body of which the deformation by heating during use or at least in a certain high-temperature range is effectively suppressed (hereinafter may referred to as heating during use), the production method thereof, and heating equipment.

The inorganic fibrous shaped body according to one embodiment of the invention which is to solve the above-mentioned subject comprises partially-crystallized bio-soluble inorganic fibers and an inorganic binder. According to the invention, it is possible to provide an inorganic fibrous shaped body of which deformation by heating during use is effectively suppressed.

In the above-mentioned inorganic fibrous shaped body, the bio-soluble inorganic fibers may contain crystals of wollastonite, diopside or enstatite. Further, the $SiO_2$ content of the bio-soluble inorganic fibers may be 66 to 82 mass%. The CaO content of the bio-soluble inorganic fibers may be 10 to 34 mass%. The MgO content of the bio-soluble inorganic fibers may be 1 mass% or less.

The method for producing an inorganic fibrous shaped body according to one embodiment of the invention comprises the first step of subjecting amorphous bio-soluble inorganic fibers to a heat treatment; and the second step of shaping the heat-treated bio-soluble inorganic fibrous fibers and an inorganic binder to form an inorganic fibrous shaped body. According to the invention, it is possible to provide a method for producing an inorganic fibrous shaped body of which deformation by heating during use is effectively suppressed.

In the first step, the amorphous bio-soluble inorganic fibers may be subjected to a heat treatment at a temperature which is equal to or higher than the crystallization temperature thereof, whereby the partially-crystallized bio-soluble inorganic fibers are obtained. Further, the heat-treated bio-soluble inorganic fibers may contain crystals of wollastonite, diopside or enstatite. The $SiO_2$ content of the bio-soluble inorganic fibers may be 66 to 82 mass%. Further, the CaO content of the bio-soluble inorganic fibers may be 10 to 34 mass%. The MgO content of the bio-soluble inorganic fibers is 1 mass% or less.

The heating equipment according to one embodiment of the invention in order to solve the above-mentioned subject is characterized in that it comprises any of the above-mentioned inorganic fibrous shaped bodies. According to the invention, it is possible to provide heating equipment which comprises an inorganic fibrous shaped body of which deformation by heating during use is effectively suppressed.

According to the invention, it is possible to provide inorganic fibrous shaped body of which deformation by heating during use is effectively suppressed, the production method thereof and heating equipment.

## BRIEF DESCRIPTION OF THE DRAWINGS

FIG. 1 is an explanatory view showing one example of the results of evaluating bio-solubility of bio-soluble inorganic fibers in an Example according to one embodiment of the invention;

FIG. 2 is an explanatory view showing another example of the results of evaluating bio-solubility of bio-soluble inorganic fibers in an Example according to one embodiment of the invention;

FIG. 3 is an explanatory view showing one example of the results of analysis on the formation of crystals by a heat treatment of bio-soluble inorganic fibers in an Example according to one embodiment of the invention;

FIG. 4 is an explanatory view showing one example of the results of evaluating the ratio of linear shrinkage after heating of inorganic fibrous shaped bodies in an Example according to one embodiment of the invention;

FIG. 5 is an explanatory view showing one example of the results of evaluating the amount of curvature of inorganic fibrous shaped body in an Example according to one embodiment of the invention; and

FIG. 6 is an explanatory view showing another example of the results of evaluating the amount of curvature of inorganic fibrous shaped bodies in an Example according to one embodiment of the invention.

## MODE FOR CARRYING OUT THE INVENTION

One embodiment of the invention will be explained hereinbelow. The invention is, however, not restricted to the following embodiment.

First, the method for producing an inorganic fibrous shaped body according to this embodiment (hereinafter referred to as the "method of the invention") will be explained below. The method of the invention comprises the first step of subjecting amorphous bio-soluble inorganic fibers to a heat treatment (hereinafter referred to as the "heat treatment step") and the second step of shaping the heat-treated inorganic bio-soluble fibers and an inorganic binder to form an inorganic fibrous shaped body (hereinafter referred to as the "shaping step").

In the heat treatment step, first, amorphous bio-soluble inorganic fibers are prepared. Bio-soluble inorganic fibers are inorganic fibers which have bio-solubility (bio-solubility is a property of being dissolved in a living body if inhaled in the lung of the living body, for example). At least part of the bio-soluble inorganic fibers is amorphous, which can be confirmed by a powder X-ray diffraction (XRD) measurement.

The bio-soluble inorganic fibers are inorganic fibers of which the solubility in a physiological saline solution at 40°C is 1% or more, for example.

Solubility in a physiological saline solution can be measured by the following method, for example. Specifically, first, 1g of a sample which is prepared by pulverizing inorganic fibers to 200 meshes or less and 150 mL of a physiological saline solution are placed in an Erlenmeyer flask (volume: 300 mL), and the flask is placed in an incubator of 40°C. Next, horizontal vibration of 120 rotations per minute is continuously applied to the Erlenmeyer flask for 50 hours. Thereafter, the concentration of each element (mg/L) contained in a filtrate is measured by an ICP emission spectrometer. Then, the solubility in a physiological saline solution (%) is calculated based on the measured concentration of each element and the content (mass%) of each element in the inorganic fibers before the dissolution. Specifically, if the elements to be measured are silicon (Si), magnesium (Ng), calcium (Ca) and aluminum (Al), the solubility C (%) in a physiological saline solution is calculated by the following formula:

C (%) = [Amount (L) of filtrate $\times$ (a1 + a2 + a3 + a4) $\times$ 100] / [mass (mg) of inorganic fibers before dissolution $\times$ (b1 + b2 + b3 + b4) / 100]. In this formula, a1, a2, a3 and a4 are respectively the measured concentration (mg/L) of silicon, magnesium, calcium and aluminum, and b1, b2, b3 and b4 are respectively the content (mass%) of silicon, magnesium, calcium and aluminum in the inorganic fibers before dissolution.

Further, the bio-soluble inorganic fibers have a dissolution velocity constant of 150 ng/cm$^2 \cdot$h or more, preferably 150 to 1500 ng/cm$^2 \cdot$h or more, more preferably 200 to 1500 ng/cm$^2 \cdot$h.

It is preferred that the bio-soluble inorganic fibers have an assumed half life of 40 days or less, preferably 10 days to 40 days, more preferably 10 days to 30 days.

The SiO$_2$ content of the bio-soluble inorganic fibers may be 50 to 82 mass%, for example. The SiO$_2$ content is preferably 63 to 81 mass%, more preferably 66 to 80 mass%, with 71 to 76 mass% being further preferable. For example, the bio-soluble inorganic fibers are inorganic fibers having an SiO$_2$ content of 66 to 82 mass%, in which the total of the CaO content and the MgO content is 18 to 34 mass%. The total of the CaO content and the MgO content is preferably 19 to 34 mass%, more preferably 20 to 34 mass%. The ranges of the total of the CaO content and the MgO content can be arbitrarily combined with the above-mentioned ranges of the $SiO_2$ content. By allowing the $SiO_2$ content to be in the above-mentioned range, the bio-soluble inorganic fibers also have excellent heat resistance in addition to bio-solubility.

The CaO content of the bio-soluble inorganic fibers may be 10 to 34 mass%, for example. That is, the bio-soluble inorganic fibers have an $SiO_2$ content of 66 to 82 mass% and a CaO content of 10 to 34 mass% (hereinafter often referred to as the "$SiO_2$/CaO fibers"). The CaO content is preferably 12 to 32 mass%, more preferably 14 to 30 mass%. These ranges of the CaO content can be arbitrarily combined with the above-mentioned ranges of the total of CaO content and the MgO content.

The MgO content of the bio-soluble inorganic fibers may be 1 mass% or less (that is, 0 to 1 mass%). Normally, the MgO content exceeds 0 mass%. That is, the bio-soluble inorganic fibers may be $SiO_2$/CaO fibers having an $SiO_2$ content of 66 to 82 mass%, a CaO content of 10 to 34 mass% and an MgO content of 1 mass% or less. The MgO content is preferably 0.9 mass% or less, more preferably 0.8 mass% or less. These ranges of these MgO content may be arbitrarily combined with the above-mentioned $SiO_2$ content, the above-mentioned range of the total of the CaO content and the MgO content, and/or the above-mentioned CaO content.

The MgO content of the bio-soluble inorganic fibers may exceed 1 mass% and 20 mass% or less. That is, the bio-soluble inorganic fibers may be inorganic fibers having an $SiO_2$ content of 66 to 82 mass% and an MgO content of exceeding 1 mass% and 20 mass% or less (hereinafter often referred to as the "$SiO_2$/MgO fibers"). The MgO content is preferably 2 to 19 mass%, more preferably 3 to 19 mass%. The ranges of the MgO content may be arbitrarily combined with the above-mentioned ranges of the $SiO_2$ content, and/or the above-mentioned ranges of the total of the CaO content and the MgO content.

In the bio-soluble inorganic fibers, the total of the $SiO_2$ content, the MgO content and the CaO content may be 97 mass% or more (that is, 97 to 100 mass%). The total of the $SiO_2$ content, the MgO content and the CaO content is preferably 97.5 mass% or more, more preferably 98 mass% or more. The ranges of the total of the $SiO_2$ content, the MgO content and the CaO content may be arbitrarily combined with the above-mentioned ranges of $SiO_2$ content, the above-mentioned ranges of the total of the CaO content and the MgO content, the above-mentioned ranges of the CaO content and/or the above-mentioned ranges of the MgO content.

The bio-soluble inorganic fibers may contain other components in addition to $SiO_2$ and an alkaline earth metal oxide (at least one of MgO and CaO, for example). That is, the bio-soluble inorganic fibers may or may not further contain one or two or more selected from the group consisting of alumina ($Al_2O_3$), titania ($TiO_2$), zirconia ($ZrO_2$), iron oxide ($Fe_2O_3$), manganese oxide (MnO) and potassium oxide ($K_2O$).

Specifically, if the bio-soluble inorganic fibers contain $Al_2O_3$, the $Al_2O_3$ content may be 5 wt% or less, 3.4 wt% or less or 3.0 wt% or less, for example. The $Al_2O_3$ content may be 1.1 wt% or more or 2.0 wt% or more. It is preferred that the $Al_2O_3$ content be 0 to 3 mass%, with 1 to 3 mass% being more preferable. If $Al_2O_3$ is contained in the amount range, the strength will be increased. In this case, in the bio-soluble inorganic fibers, the total of the $SiO_2$ content, the MgO content, the CaO content and $Al_2O_3$ content is 98 mass% or more (that is, 98 to 100 mass%) or 99 mass% or more (that is, 99 to 100 mass%).

Specifically, the bio-soluble inorganic fibers having the following compositions can be exemplified.
Total of $SiO_2$, $Al_2O_3$, $ZrO_2$ and $TiO_2$ 50 to 82 wt%
Total of CaO and MgO 18 to 50 wt%

Further, the bio-soluble inorganic fibers having the following composition can be exemplified.
$SiO_2$ 50 to 82 wt%
Total of CaO and MgO 10 to 43 wt%

Further, the $SiO_2$/MgO fibers having the following composition can be exemplified:

$SiO_2$ 66 to 82 wt%
CaO 1 to 9 wt% (2 to 8 wt%, for example)
MgO 10 to 30 wt% (15 to 20 wt%, for example)
$Al_2O_3$ 3 wt% or less
Other oxides less than 2 wt%

The $SiO_2$/CaO fibers having the following composition can be exemplified. The fibers having the following composition are excellent in bio-solubility after heating and fire resistance.
$SiO_2$ 66 to 82 wt% (68 to 80 wt%, 70 to 80 wt%, 71 to 80 wt% or 71.25 to 76 wt%, for example)
CaO 10 to 34 wt% (18 to 30 wt%, 20 to 27 wt% or 21 to 26 wt%, for example)
MgO 3 wt% or less (1 wt% or less, for example)
$Al_2O_3$ 5 wt% or less (3.4 wt% or less or 3 wt% or less, for example. Further, 1.1 wt% or more or 2.0 wt% or more)
Other oxides less than 2 wt%

The above-mentioned bio-soluble inorganic fibers may or may not contain, as other components, one or more selected form alkaline metal oxides ($K_2O$, $Na_2O$ or the like), $Fe_2O_3$, $ZrO_2$, $TiO_2$, $P_2O_5$, $B_2O_3$, $R_2O_3$ (R is selected from Sc, La, Ce, Pr, Nd, Sm, Eu, Gd, Tb, Dy, Ho, Er, Tm, Yb, Lu, Y or a mixture thereof). Each of the other oxides may be contained in an amount of 0.2 wt% or less or 0.1 wt% or less.

Alkaline metal oxides may or may not be contained. If contained, the amount thereof may be 0.2 wt% or less, 0.15 wt% or less or 0.1 wt% or less. The amount of each alkaline metal oxide may be 0.2 wt% or less, or 0.1 wt% or less. The total of the alkaline metal oxides may be 0.2 wt% or less. An alkaline metal oxide may be contained in an amount exceeding 0.01 wt%, 0.05 wt% or more or 0.08 wt% or more.

$K_2O$ may or may not be contained. If contained, the amount thereof may be 0.2 wt% or less, 0.15 wt% or less or 0.1 wt% or less. $K_2O$ may be contained in an amount exceeding 0.01 wt%, of 0.05 wt% or more or of 0.08 wt% or more. $Na_2O$ may or may not be contained. If contained, the amount thereof may be 0.2 wt% or less, 0.15 wt% or less or 0.1 wt% or less. $Na_2O$ may be contained in an amount exceeding 0.01 wt%, of 0.05 wt% or more or of 0.08 wt% or more. The total contents of Na and K may exceed 500 ppm.

The average fiber diameter of the bio-soluble inorganic fibers is not particularly restricted, as long as it is in a range enabling an inorganic fibrous shaped body to be properly produced. For example, the average fiber diameter of the bio-soluble inorganic fibers is 1 to 10 $\mu$m, preferably 2 to 6 $\mu$m. if the average fiber diameter is less than 1 $\mu$m, the bio-soluble inorganic fibers tend to have poor water resistance, whereby the strength of an inorganic fibrous shaped body to be produced tends to be decreased. Further, if the average fiber diameter exceeds 10 $\mu$m, since the density of an inorganic fibrous shaped body to be produced becomes too low, the strength of the inorganic fibrous shaped body tends to be decreased.

The average fiber length of the bio-soluble inorganic fibers is not particularly restricted as long as it is in a range enabling an inorganic fibrous shaped body to be properly produced. For example, the average fiber length is 1 to 200 mm, preferably 1 to 100 mm. If the average fiber length is within the above-mentioned range, an inorganic fibrous shaped body having an appropriate density can be produced easily.

Next, in the heat treatment step, the amorphous bio-soluble inorganic fibers prepared as mentioned above are subjected to a heat treatment, whereby the heat-treated bio-soluble inorganic fibers are obtained. That is, the method including this heat treatment step is a method for producing the heat-treated bio-soluble inorganic fibers (hereinafter referred to as the "heat-treated fibers") by subjecting amorphous bio-soluble inorganic fibers (hereinafter referred to as the "untreated fibers") to a heat treatment. The thus produced heat-treated fibers are used as the raw material for an inorganic fibrous shaped body, as mentioned later.

The conditions of a heat treatment (temperature and time, for example) are not restricted as long as the conditions are determined so that the deformation (curvature, shrinkage, or the like) of the inorganic fibrous shaped body containing heat-treated fibers is decreased as compared with that of an inorganic fibrous shaped body containing untreated fibers when the inorganic fibrous shaped body containing the heat-treated fibers is heated.

That is, the heat treatment is conducted under conditions in which the amount of curvature of the inorganic fibrous shaped body containing heat-treated fibers is decreased as compared with that of an inorganic fibrous shaped body containing untreated fibers. Further, the heat treatment is conducted under conditions in which the ratio of linear shrinkage after heating at 300 to 1300°C of an inorganic fibrous shaped body containing heat-treated fibers is decreased as compared with that of an inorganic fibrous shaped body containing untreated fibers, for example.

In the meantime, the ratio of linear shrinkage after heating can be obtained by the following method, for example. An inorganic fibrous shaped body is heated in an electronic furnace for 24 hours at a fixed temperature within a range of 300 to 1300°C. The ratio of linear shrinkage after heating is obtained by the following formula based on the measured length of the inorganic fibrous shaped body before and after the heating.

The ratio of linear shrinkage after heating (%) = {(X-Y) / X} $\times$ 100

In this formula, X is the length (mm) of the inorganic fibrous shaped body before the heating and Y is the length (mm) of the inorganic fibrous shaped body after the heating.

The heating temperature in the heat treatment of $SiO_2$/MgO fibers (hereinafter referred to as the "heat treatment temperature") is 600 to 1300°C, for example, preferably 800 to 1300°C, with 850 to 1000°C being more preferable.

The heating temperature in the heat treatment of $SiO_2$/CaO fibers (hereinafter referred to as the "heat treatment temperature") is 820 to 1300°C, for example, preferably 830 to 1300°C, more preferably 840 to 1000°C, with 850 to 1000°C being most preferable.

The heat treatment temperature may be a temperature which is equal to or higher than the crystallization temperature of untreated fibers. That is, in this case, in the heat treatment step, untreated fibers are subjected to a heat treatment which is equal to or higher than the crystallization temperature, whereby partially-crystallized heat-treated fibers are obtained. The crystallization temperature is measured by TG-DTA (thermogravimetry / differential thermal analysis), for example.

Since the crystallization temperature varies according to the chemical composition of the untreated fibers, the heat treatment temperature which is equal to or higher than the crystallization temperature cannot be specified. The crystallization temperature is, however, 600 to 1300°C, 600 to 1100°C or 800 to 1000°C, for example.

By conducting a heat treatment at a temperature which is equal to or higher than the crystallization temperature, crystals are generated in the heat-treated fibers in correspondence with the chemical composition and the heat treatment temperature. That is, the heat-treated fibers contain crystals which are not contained in the untreated fibers which are used for the production of the heat-treated fibers. Crystals contained in the heat-treated fibers can be analyzed by the X-ray powder diffraction, for example. That is, the heat treatment is conducted by subjecting untreated fibers to a heat treatment such that heat-treated fibers containing crystals which are not detected in the untreated fibers by the X-ray powder diffraction are obtained.

If the heat-treated fibers are the above-mentioned $SiO_2/CaO$ fibers, partially-crystallized heat-treated fibers contain crystals of wollastonite, for example. In this case, the heat-treated fibers may further contain other crystals. That is, the heat-treated fibers contain one or two or more kinds of crystals selected from the group consisting of wollastonite, cristobalite and tridymite.

If the heat-treated fibers are the above-mentioned $SiO_2/MgO$ fibers, partially-crystallized heat-treated fibers contain crystals of enstatite, for example. In this case, the heat-treated fibers may further contain other crystals. That is, the heat-treated fibers contain one or two or more kinds of crystals selected from the group consisting of enstatite, diopside, cristobalite and tridymite.

If the heat-treated fibers are other bio-soluble inorganic fibers (for example, bio-soluble inorganic fibers with an $SiO_2$ content of 35 to 45 mass%, an $Al_2O_3$ content of 10 to 20 mass%, an MgO content of 4 to 8 mass%, a CaO content of 20 to 40 mass%, an $Fe_2O_3$ content of 0 to 3 mass% and an MnO content of 0 to 1 mass%), the partially-crystallized heat-treated fibers may contain one or two or more crystals selected from the group consisting of wollastonite, anorthite, diopside, akermanite and augite.

As mentioned above, no specific restrictions are imposed on the heat-treatment temperature as long as effects that deformation by heating of an inorganic fibrous shaped body containing heat-treated fibers is suppressed as compared with an inorganic fibrous shaped body containing untreated fibers. For example, the heat treatment temperature may be lower than the crystallization temperature of the untreated fibers.

The heating time in the heat treatment (hereinafter referred to as the "heat treatment time") is also not specifically restricted as long as it is in a range which attains the above-mentioned effects of the heat treatment. That is, the heat treatment time is 1 minute to 48 hours, for example, preferably 3 minutes to 24 hours.

Specifically, if the heat treatment temperature is equal to or higher than the crystallization temperature of the untreated fibers, the heat treatment time is 3 minutes to 8 hours, for example, preferably 5 minutes to 3 hours.

Further, by conducting a heat treatment, the bio-soluble inorganic fibers can have changed bio-solubility. Specifically, the bio-soluble inorganic fibers tend to have lowered bio-solubility by subjecting them to a heat treatment. In particular, when the bio-soluble inorganic fibers are heated at a temperature which is equal to or higher than the crystallization temperature to allow part of the bio-soluble inorganic fibers to be crystallized, bio-solubility after heating tends to be lowered as compared with that before heating.

In this regard, the inventors of the invention have found that, by using the above-mentioned $SiO_2/CaO$ fibers as the bio-soluble inorganic fibers, it is possible to obtain heat-treated fibers having improved bio-solubility as compared with that before a heat treatment.

Specifically, for example, by subjecting $SiO_2/CaO$ fibers with an $SiO_2$ content of 66 to 82 mass% and a CaO content of 10 to 34 mass% to a heat treatment at a temperature which is equal to or higher than the crystallization temperature thereof, bio-solubility of the resulting heat-treated fibers is significantly improved as compared with that before heat treatment. Further, in this case, since heat-treated fibers have a large $SiO_2$ content, they have improved heat resistance in addition to improved bio-solubility.

Further, if an inorganic fibrous shaped body containing heat-treated fibers is provided on the wall of an industrial furnace and exposed to high temperatures, when the amount ratio of $SiO_2$ is decreased in the $SiO_2/CaO$ amount ratio of the heat-treated fibers, for example, the heat-treated fibers may undergo a chemical reaction with $Al_2O_3$. As a result, various furnace materials may suffer disadvantages such as significant deformation of the inorganic fibrous shaped body.

The chemical reaction of the heat-treated fibers and $Al_2O_3$ is a phenomenon which occurs depending on the amount ratio of $SiO_2$, CaO and $Al_2O_3$ ($SiO_2/CaO/Al_2O_3$). From the solid state diagram of the oxide, it can be confirmed that the chemical reaction (melting) occurs. This chemical reaction accompanied by the melting can be suppressed by increasing the $SiO_2$ content of the bio-soluble inorganic fibers, for example. In this regard, since the above-mentioned $SiO_2/CaO$ fibers have a large $SiO_2$ content, the chemical reaction of the $SiO_2/CaO$ fibers with $Al_2O_3$ constituting the wall of an industrial furnace can be effectively suppressed.

Further, $SiO_2/CaO$ fibers having an $SiO_2$ content of 66 to 82 mass%, a CaO content of 10 to 34 mass% and an MgO content of 1 mass% or less are preferably used. In this case, since the MgO content is small, deformation of an inorganic fibrous shaped body containing heat-treated fibers during heating can be effectively suppressed.

That is, for example, since $SiO_2/MgO$ fibers have a relatively large MgO content, crystals containing Si and Mg as main components (enstatite, for example) are preferentially formed by heating at a temperature which is equal to or higher than the crystallization temperature. On the other hand, the above-mentioned $SiO_2/CaO$ fibers have a high CaO content and a low MgO content, crystals containing Si and Ca as main components (wollastonite, for example) are preferentially formed by heating at a temperature which is equal to or higher than the crystallization temperature. Since the ionic radius of Ca is larger than that of Mg, the specific gravity of crystals containing Si and Ca as main components is smaller than that of crystals containing Si and Mg as main components. The smaller the specific gravity of the crystals contained in the heat-treated fibers, the smaller the amount of deformation (ratio of linear shrinkage after heating, for example) of the heat-treated fibers.

Therefore, if an inorganic fibrous shaped body contains the above-mentioned $SiO_2$/CaO fibers having a small MgO content as the heat-treated fibers, deformation (curvature, linear shrinkage after heating or the like) of the inorganic fibrous shaped body at the time of heating is effectively suppressed.

Even in the case where the bio-solubility of the bio-soluble inorganic fibers is lowered by the heat treatment, no specific problems arise as long as the bio-solubility after the heat treatment is within the desired range (solubility in a physiological saline solution at 40°C is 1% or more, for example).

Next, in the shaping step, an inorganic fibrous shaped body containing the heat-treated fibers prepared in the above-mentioned heat treatment step and an inorganic binder is formed. Specifically, at first, a raw material containing heat-treated fibers and an inorganic binder is prepared.

No restrictions are imposed on the inorganic binder as long as it is capable of binding heat-treated fibers. One or two or more types of inorganic binders selected from the group consisting of colloidal silica such as anionic colloidal silica and cationic colloidal silica, fumed silica, zirconia sol, titania sol, alumina sol, bentonite and kaolin can be used.

In the raw material, the content of the heat-treated fibers is 70 to 95.5 mass%, for example, and the content of the inorganic binder is 0.5 to 30 mass%, for example.

The raw material may further contain other components in addition to the heat-treated fibers and the inorganic binder. That is, the raw material may further contain an organic binder. No specific restrictions are imposed on the organic binder as long as it is capable of binding heat-treated fibers. One or two or more types of organic binders selected from the group consisting of starch, an acrylic resin and polyacrylamide can be used. The raw material may further contain fireproof inorganic powder. The fireproof inorganic powder is, for example, silica, alumina, titania, zirconica, ceramic powder such as silicon nitride and silicon carbide and/or carbon powder such as carbon black.

The raw material is prepared by mixing the heat-treated fibers, an inorganic binder and, if necessary, other components with a solvent. No restrictions are imposed on the solvent as long as it is capable of mixing and dispersing heat-treated fibers and an inorganic binder. For example, the solvent is preferably water (distilled water, ion-exchange water, tap water, ground water, industrial water) and/or a polar organic solvent (for example, monovalent alcohol such as ethanol and propanol and divalent alcohol such as ethylene glycol). The solvent is preferably water.

The raw material thus prepared for the inorganic fibrous shaped body is an unshaped composition. Specifically, the raw material is a composition having plasticity. For example, it is a composition having fluidity (so-called slurry or the like).

In the shaping step, an inorganic fibrous shaped body, which has a shape, is produced from the thus-prepared unshaped raw material. Specifically, the raw material is put in a mold with a predetermined shape. In the mold, the solvent is removed from the raw material, and the raw material is then dried, whereby an inorganic fibrous shaped body having a shape corresponding to the shape of the mold is obtained.

More specifically, for example, the raw material is poured into a mold in which a net is provided at the bottom thereof, and the solvent contained in the raw material is sucked up through the net to remove the solvent, followed by heating the raw material in a dryer to allow it to be dried. The heating temperature for drying is, for example, 60 to 150°C, preferably 80 to 120°C.

The method for forming an inorganic fibrous shaped body by shaping is not limited to the above-mentioned suction molding method. That is, it is also possible to obtain an inorganic fibrous shaped body by a method in which an unshaped composition having fluidity lower than that of slurry is prepared as a raw material, and the raw material is then put in a mold with a predetermined shape, and the raw material is dried and fired in the mold.

The inorganic fibrous shaped body according to this embodiment (hereinafter referred to as the "the shaped body of the invention") is preferably produced by the above-mentioned method of the invention. That is, the shaped body of the invention is an inorganic fibrous shaped body containing the above-mentioned heat-treated fibers and an inorganic binder. The shaped body of the invention is, for example, an inorganic fibrous shaped body containing partially-crystallized bio-soluble inorganic fibers (heat-treated fibers) and an inorganic binder.

The $SiO_2$ content of the heat-treated fibers contained in the shaped body of the invention is 66 to 82 mass%, for example. In this case, the shaped body of the invention has improved heat resistance due to a relatively large $SiO_2$ content.

The CaO content of the heat-treated fibers contained in the shaped body of the invention is 10 to 34 mass%, for example. That is, the heat-treated fibers are $SiO_2$/CaO fibers having an $SiO_2$ content of 66 to 82 mass% and a CaO content of 10 to 34 mass%.

The partially-crystallized $SiO_2$/CaO fibers contain crystals of wollastonite, for example. In this case, the

$SiO_2/CaO$ fibers may contain one or two or more types of crystals selected from the group consisting of wollastonite, cristobalite and tridymite.

As mentioned above, since these $SiO_2/CaO$ fibers are subjected to a heat treatment prior to the shaping of an inorganic fibrous shaped body, they have significantly excellent bio-solubility which has been enhanced by the heat treatment.

Due to a large $SiO_2$ content of the $SiO_2/CaO$ fibers, as mentioned above, if the shaped body of the invention is used while being heated on the wall of an industrial furnace containing $Al_2O_3$, the chemical reaction of the $SiO_2/CaO$ fibers and the $Al_2O_3$ is effectively suppressed, whereby deformation of the shaped body of the invention can be effectively suppressed.

The MgO content of the heat-treated fibers contained in the shaped body of the invention is 1 mass% or less, for example. That is, the heat-treated fibers are $SiO_2/CaO$ fibers having an $SiO_2$ content of 66 to 82 mass%, a CaO content of 10 to 34 mass% and an MgO content of 1 mass% or less. In this case, as mentioned above, due to a small MgO content of the heat-treated fibers, deformation (curvature, linear shrinkage after heating or the like) during heating of the shaped body of the invention can be effectively suppressed.

The content of heat-treated fibers and the content of an inorganic binder in the shaped body of the invention are not particularly restricted, and are determined appropriately according to the application or the required properties thereof. For example, in the shaped body of the invention, the content of heat-treated fibers is 70 to 95.5 mass%, for example. More specifically, for example, in the shaped body of the invention, the content of the heat-treated fibers is 70 to 95.5 mass% and the content of an inorganic binder is 0.5 to 30 mass%.

The density of the shaped body of the invention is not particularly restricted, and is appropriately determined according to the application or the required properties thereof. For example, the density of the shaped body of the invention is 0.1 to 1.0 kg/cm$^3$, preferably 0.15 to 0.6 kg/cm$^3$.

The shape of the shaped body of the invention is not particularly restricted, and is appropriately determined according to the application or the required properties thereof. For example, the shape of the shaped body of the invention is a plate-like shape (a polygonal (such as square) plate (board)-like shape, a disk-like shape or the like), a tubular shape (a polygonal (such as square) pillar-like shape, a cylindrical shape, or the like), and a pyramid-like shape (a polygonal pyramid-like shape such as quadrangular pyramid, cone, or the like). The shaped body may not include paper (normally, the thickness of 8 mm or less).

Due to the presence of the heat-treated fibers as the bio-soluble fibers, deformation of the shaped body of the invention when used while heating is effectively suppressed. That is, for example, it is preferred that the ratio of linear shrinkage after heating of the shaped body of the invention at 1100°C for 24 hours be 3.0% or less, more specifically 0.0 to 3.0%. When heated at 400°C for 24 hours, the amount of curvature of the shaped body of the invention is 1.3 mm or less, more specifically, 1.0 mm or less. The measuring methods are mentioned in the Examples.

The shaped body of the invention can be used for various applications. That is, the shaped body of the invention is used as a heat-insulating material, a sealing material and a packing material in heating equipment such as a heat-treatment apparatus, an industrial furnace and an incinerator. The shaped body of the invention is used as an acoustic absorbent material, a filtering material, a catalyst support, a reinforcing material for a composite material and a fire resistive covering material.

The invention will be explained with reference to the following examples.

[Example 1]

The bio-solubility of the bio-soluble inorganic fibers before and after the heat treatment was evaluated. First, as the first bio-soluble inorganic fibers, amorphous $SiO_2/CaO$ fibers having an $SiO_2$ content of 73 mass%, a CaO content of 21 to 26 mass%, an MgO content of 1 mass% or less and an $Al_2O_3$ content of 1 to 3 mass% (hereinafter referred to as the "fibers A") were prepared. The crystallization temperature of the fibers A was 895°C.

Then, the fibers A were subjected to a heat treatment. The heat treatment was conducted at 800°C, 1000°C or 1100°C. The heat treatment was conducted for 24 hours.

Next, the bio-solubility of the fibers A before and after the heat treatment at each temperature was evaluated. As the index for indicating the bio-solubility, the dissolution velocity constant (ng/cm$^2\cdot$h) and the assumed half life (days) were evaluated.

The dissolution velocity constant of the fibers A was measured as follows. Specifically, at first, the fibers A were allowed to pass through a sieve having a mesh size of 45 $\mu$m, thereby to remove shots, and the fibers A were placed on filter paper. Subsequently, by means of a micro pump, a physiological saline solution was added dropwise to the fibers A, and a filtrate which had been passed through the fibers A and the filter paper was stored in a tank. After the lapse of a predetermined period of time, the stored filtrate was collected. The quantity of eluted components in the thus collected filtrate was measured by means of an ICP emission spectrometer, whereby the quantity (ng) of eluted components was obtained. The dissolution velocity constant was calculated by the following formula:

$$\text{Dissolution velocity constant (ng/cm}^2 \cdot \text{h) = quantity of eluted components (ng) /}$$

$$\text{(specific surface area (cm}^2\text{) of the fibers A} \times \text{testing time (h))}$$

The assumed half life was measured with reference to a test to evaluate whether fibers satisfy the standards for exclusion from application relating to Note Q of the EU directive 97/69/EC (German standards). Specifically, in this test, in the measurement of the short-term bioretention properties of fibers when injected into the trachea of an animal, if a fiber with a length of longer than 20 $\mu$m has a loaded half life of shorter than 40 days, this fiber satisfies the standards for exclusion from application. When this test was conducted by using the fibers A before the heat treatment, the loaded half life of the fibers A was found to be 19 days. The assumed half life of the fibers A after the heat treatment was calculated by multiplying "a value obtained by dividing the dissolution velocity constant of the fibers A before the heat treatment by the dissolution velocity constant of the fibers A after the heat treatment" and "the loaded half life of the fibers A before the heat treatment".

Then, as the second bio-soluble inorganic fibers, amorphous $SiO_2$/MgO fibers having an $SiO_2$ content of 76 mass%, a CaO content of 2 to 6 mass%, an MgO content of 16 to 20 mass% or less and an $Al_2O_3$ content of 1 to 2 mass% (hereinafter referred to as the "fibers B") were prepared. The crystallization temperature of the fibers B was 857°C.

Next, the fibers B were subjected to a heat treatment. The heat treatment was conducted at 700°C, 800°C, 850°C, 900°C or 1000°C. The heat treatment was conducted for 24 hours for heat treatment temperatures of 700°C, 800°C and 1000°C, and 50 hours for heat treatment temperatures of 850°C and 900°C.

Then, as in the case of the fibers A mentioned above, the bio-solubility of the fibers B before and after the heat treatment at each temperature was evaluated.

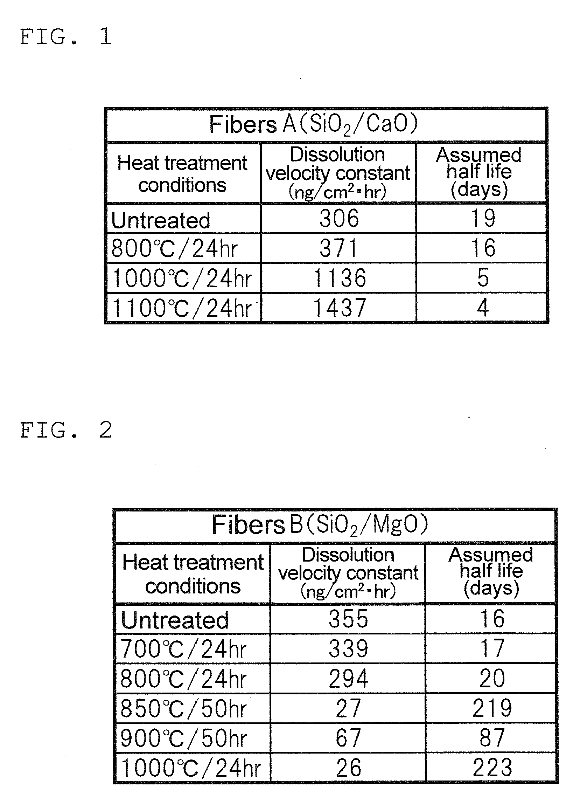

FIG. 1 shows the results of evaluating the bio-solubility of the fibers A. FIG. 2 shows the results of evaluating the bio-solubility of the fibers B. As shown in FIG. 1 and FIG. 2, both the fibers A and the fibers B before the heat treatment (indicated as the "untreated" in the figure) had excellent bio-solubility.

As shown in FIG. 1, the bio-solubility of the fibers A was improved after the heat treatment. In particular, by conducting a heat treatment at a temperature exceeding the crystallization temperature of the fibers A, the bio-solubility of the fibers A was significantly improved. In this way, the fibers A after the heat treatment had significantly improved bio-solubility.

As shown in FIG. 2, the bio-solubility of the fibers B was deteriorated after the heat treatment. In particular, by conducting a heat treatment at a temperature around or higher than the crystallization temperature of the fibers B, the bio-solubility of the fibers B was significantly deteriorated.

[Example 2]

The fibers A were subjected to a heat treatment, and generation of crystals in the fibers A was analyzed. First, the fibers A were subjected to a heat treatment. The heat treatment was conducted at 600°C, 700°C, 800°C, 900°C, 1000°C, 1100°C, 1200°C, 1300°C or 1400°C. The heat treatment was conducted for 24 hour. Subsequently, the heat-treated fibers A were analyzed by the powder X-ray diffraction (XRD).

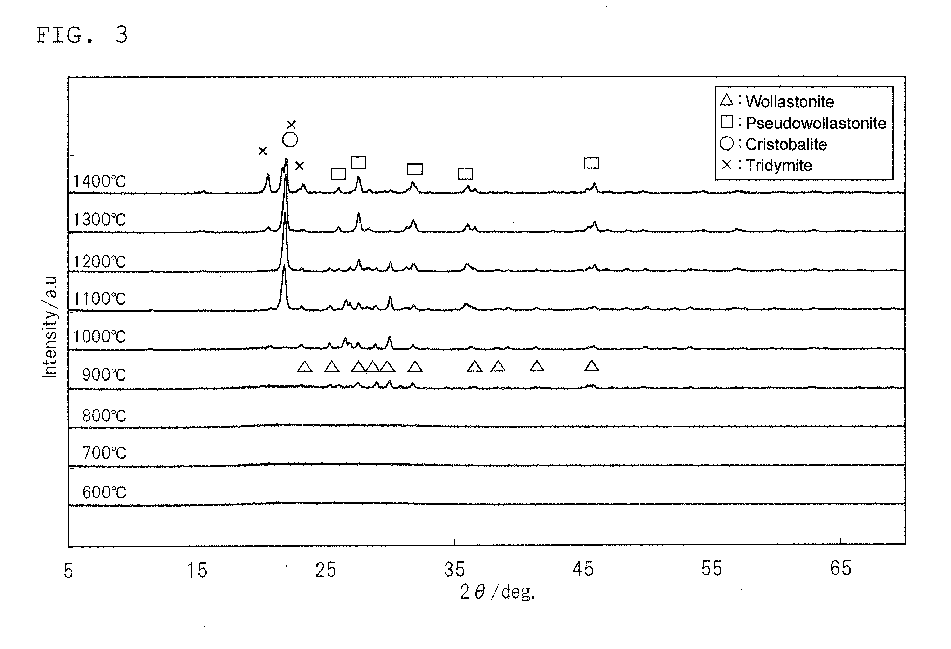

FIG. 3 shows the results of the XRD measurement of the fibers A after the heat treatment at each heat treatment temperature. In FIG. 3, the "$\triangle$" indicates the peak of crystals of wollastonite ($CaSiO_3$), the "$\square$" indicates the peak of crystals of pseudowollastonite, the "$\bigcirc$" indicates the peak of crystals of cristobalite, and the "$\times$" indicates the peak of crystals of tridymite.

As shown in FIG. 3, it is confirmed that, by conducting a heat treatment at a temperature higher than the crystallization temperature of the fibers A, crystals which were not detected before the heat treatment were generated in the fibers A.

That is, by conducting a heat treatment at a temperature which is equal to or higher than 900°C, crystals of wollostonite were generated. Further, by conducting a heat treatment at a temperature which is equal to or higher than 1100°C, crystals of cristobalite were generated. Further, by conducting a heat treatment at a temperature which is equal to or higher than 1200°C, crystals of pseudowollastonite were generated. By conducting a heat treatment at a temperature which is equal to or higher than 1300°C, crystals of tridymite were generated.

As in the case of the fibers A, the fibers B were subjected to a heat treatment, and the heat-treated fibers B were then subjected to an XRD measurement. As a result, it was confirmed that, by conducting a heat treatment which is equal to or higher than 900°C, crystals of enstatite were generated. Further, by conducting a heat treatment at a temperature which is equal to or higher than 1100°C, crystals of cristobalite were generated. By conducting a heat treatment at a temperature which is equal to or higher than 1300°C, crystals of tridymite were generated.

[Example 3]

Inorganic fibrous shaped bodies containing the fibers A were produced, and the ratio of linear shrinkage after heating was evaluated. The fibers A which had not been subjected to a heat treatment, the fibers A which had been subjected to a heat treatment at 850°C for 10 minutes and the fibers A which had been subjected to a heat treatment at 900°C for 10 minutes were prepared.

100 parts by weight of one of the above fibers A, 5 parts by weight of colloidal silica as an inorganic binder (ST30, manufactured by Nissan Chemical Industries, Inc.), 4.5 parts by weight of starch as an organic binder (Petrosize J, manufactured by Nippon Starch Chemical Co., Ltd.) and 0.5 part by weight of a flocculant (Polystron 117, manufactured by Arakawa Chemical Industries, Ltd.) were mixed with 5000 parts by weight of water, thereby to prepare raw material slurry.

Subsequently, this raw material slurry was poured into a mold having a net at the bottom thereof. Then, water contained in the raw material slurry was sucked up through the net of the mold. Subsequently, the thus dehydrated raw material was dried by heating in a dryer.

In the way as mentioned above, a square plate-like inorganic fibrous board having a dimension of 600 mm × 900 mm × 50 mm (thickness) was formed. In the inorganic fibrous board, the content of the fibers A was 91.0 mass% and the content of colloidal silica was 4.5 mass%.

Further, the inorganic fibrous board was heated at 700°C, 800°C, 900°C, 1000°C, 1100°C, 1200°C, 1260°C or 1300°C for 24 hours in an electronic furnace. The ratio of linear shrinkage after heating of the inorganic fibrous board was obtained by the following formula:

$$\text{The ratio of linear shrinkage after heating (\%)} = \{ (X-Y) / X \} \times 100$$

In this formula, X is the length (mm) of the inorganic fibrous board before the heating and Y is the length (mm) of the inorganic fibrous board after the heating.

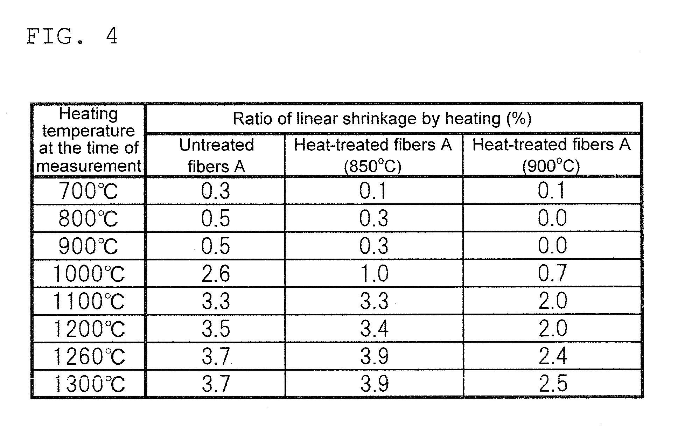

FIG. 4 shows the measurement results of the ratio of linear shrinkage after heating. As shown in FIG. 4, the ratio of linear shrinkage after heating of the inorganic fibrous boards produced by using the heat-treated fibers A ("fibers A which had been heat-treated at 850°C" and "fibers B which had been subjected to a heat treatment at 900°C" in the figure) was reduced as compared with the inorganic fibrous board produced by using the fibers A which had not been heat-treated ("untreated fibers A" in the figure).

In particular, the ratio of linear shrinkage after heating of the inorganic fibrous board containing the fibers A which had been subjected to a heat treatment at a temperature higher than the crystallization temperature (the fibers A which had been subjected to a heat treatment at 900°C) was significantly decreased in the entire heating temperature range of 700 to 1300°C for the measurement.

[Example 4]

Inorganic fibrous shaped bodies containing the fibers A or the fibers B were produced, and the amount of curvature when the inorganic fibrous shaped bodies were heated was evaluated. First, the fibers A and the fibers B were subjected to a heat treatment.

Specifically, the fibers A which had not been subjected to a heat treatment, the fibers A which had been subjected to a heat treatment at 800°C for 5 minutes, the fibers A which has been subjected to a heat treatment at 850°c for 5 minutes, the fibers A which had been subjected to a heat treatment at 850°C for 10 minutes, the fibers A which had been subjected to a heat treatment at 900°C for 5 minutes and the fibers A which had been subjected to a heat treatment at 950°C for 10 minutes were prepared.

Further, the fibers B which had not been subjected to a heat treatment, the fibers B which had been subjected to a heat treatment at 800°C for 5 minutes and the fibers B which had been subjected to a heat treatment at 900°C for 10 minutes were prepared.

Subsequently, inorganic fibrous boards containing the fibers A or the fibers B were produced. Specifically, 100 parts by weight of one of the above fibers A, 5 parts by weight of colloidal silica as an inorganic binder (ST30, manufactured by Nissan Chemical Industries, Inc.), 4.5 parts by weight of starch as an organic binder (Petrosize J, manufactured by Nippon Starch Chemical Co., Ltd.) and 0.5 part by weight of a flocculant (Polystron 117, manufactured by Arakawa Chemical Industries, Ltd.) were mixed with 5000 parts by weight of water, thereby to prepare raw material slurry. Then, in the same manner as in Example 3 mentioned above, an inorganic fibrous board containing the fibers A was produced.

Further, 100 parts by weight of one of the above fibers B, 5 parts by weight of colloidal silica as an inorganic binder (ST30, manufactured by Nissan Chemical Industries, Inc.), 4.5 parts by weight of starch as an organic binder (Petrosize J, manufactured by Nippon Starch Chemical Co., Ltd.) and 0.5 part by weight of a flocculant (Polystron 117, manufactured by Arakawa Chemical Industries, Ltd.) were mixed with 5000 parts by weight of water, thereby to prepare raw material slurry. Then, in the same manner as in Example 3 mentioned above, an inorganic fibrous board containing the fibers B was produced.

Subsequently, the amount of curvature of the inorganic fibrous board was measured. First, the inorganic fibrous board prepared in the above-mentioned method was cut into a specimen with a dimension of 860 mm × 450 mm × 50 mm (thickness). Of the surfaces of this specimen, one surface (860 mm × 450 mm) which would be arranged so that it directed to the inside of the electric furnace at the time of heating mentioned later was determined. A straight edge was put from one end to another end of the thus determined surface, and the distance (the amount of deformation before the heat treatment) between a part which is most distant from the straight edge on the surface (a part which is most recessed) and the straight edge was measured.

Thereafter, the inorganic fibrous board was provided on the inner wall of the electric furnace such that the surface of which the amount of deformation before the heat treatment had been measured was directed to the inside of the electric furnace. Further, in this electric furnace, the inorganic fibrous board was heated at 300°C, 400°C, 500°C, 600°C, 700°C, 800°C or 900°C for 24 hours. After heating, in the same manner as the measurement of the amount of deformation before the heating, the amount of deformation of the inorganic fibrous board was measured. A value obtained by deducing the amount of deformation before the heating from the amount of deformation after the heating was obtained as the amount of curvature (mm).

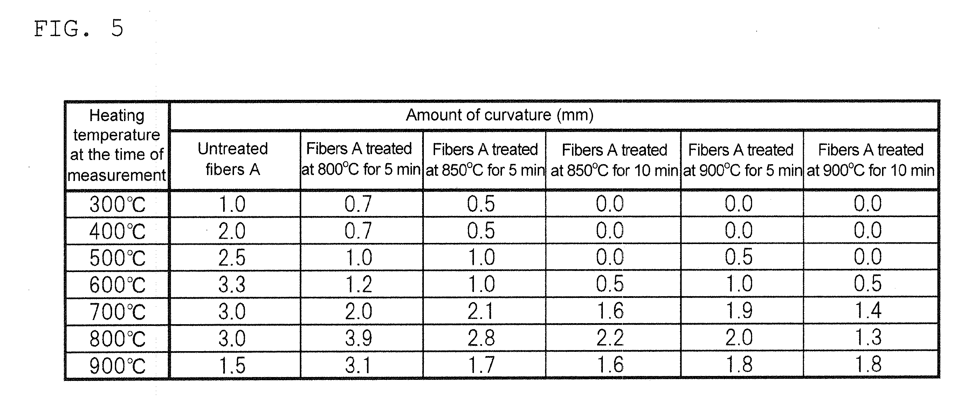

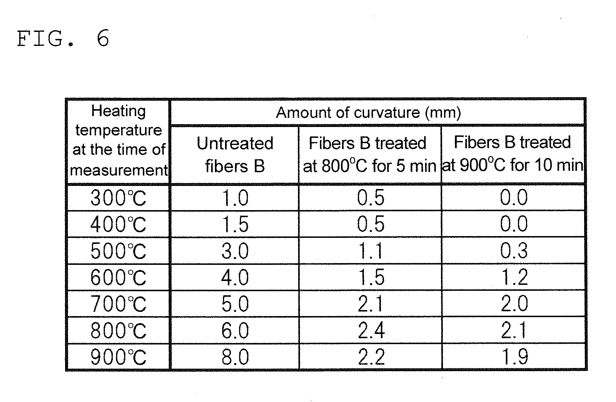

FIG. 5 shows the results of measuring the amount of curvature (mm) of the inorganic fibrous boards containing the fibers A. FIG. 6 shows the results of measuring the amount of curvature (mm) of the inorganic fibrous boards containing the fibers B.

As shown in FIG. 5, as compared with the inorganic fibrous board containing the fibers A which had not been subjected to a heat treatment (the "untreated fibers A" in the figure), in the case of the inorganic fibrous boards containing the fibers A which had been subjected to a heat treatment at a temperature which is equal to or higher than 850°C, the maximum amount of curvature in the temperature range of 300°C to 900°C was small, and a change in the amount of curvature was decreased. In an inorganic fibrous board, the surface directed to the furnace has a higher temperature by heating, and the opposite surface has a lower temperature. Therefore, by heating up to 800°C, curvature occurs due to the difference in temperature in the board. However, by heating at 900°C, since the opposite surface is also heated, the curvature was reduced in many boards. If such a change in the amount of curvature is large, it may cause cracks or the like.

As shown in FIG. 6, the amount of curvature of the inorganic fibrous boards containing the fibers B which had been subjected to a heat treatment at a temperature which is equal to or higher than 800°C was effectively decreased as compared with the inorganic fibrous board containing the fibers B which had not been subjected to a heat treatment (the "untreated fibers B" in the figure).

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification are incorporated herein by reference in its entirety.

**Claims**

1. An inorganic fibrous shaped body comprising partially-crystallized bio-soluble inorganic fibers and an inorganic binder, wherein the bio-soluble inorganic fibers are $SiO_2$/MgO fibers or $SiO_2$/CaO fibers having the following composition:

   [$SiO_2$/MgO fibers]

   $SiO_2$ 66 to 82 wt%
   CaO 1 to 9 wt%
   MgO 10 to 30 wt%
   $Al_2O_3$ 3 wt% or less

   [$SiO_2$/CaO fibers]

   $SiO_2$ 66 to 82 wt%
   CaO 10 to 34 wt%

MgO 3 wt% or less
Al$_2$O$_3$ 5 wt% or less.

2. The inorganic fibrous shaped body according to claim 1, wherein the bio-soluble inorganic fibers comprise crystals of wollastonite, diopside or enstatite.

3. The inorganic fibrous shaped body according to claim 1 or 2, wherein the shaped body is a board of which the amount of curvature when heated at 400°C for 24 hours is 1.3 mm or less.

4. A method for producing an inorganic fibrous shaped body comprising:

the first step of subjecting amorphous bio-soluble inorganic fibers which are SiO$_2$/MgO fibers having the following composition to a heat treatment of 600 to 1300°C; and
the second step of shaping the heat-treated bio-soluble inorganic fibrous fibers and an inorganic binder to form an inorganic fibrous shaped body:

[SiO$_2$/MgO fibers]

SiO$_2$ 66 to 82 wt%
CaO 1 to 9 wt%
MgO 10 to 30 wt%
Al$_2$O$_3$ 3 wt% or less.

5. A method for producing an inorganic fibrous shaped body comprising:

the first step of subjecting amorphous bio-soluble inorganic fibers which are SiO$_2$/CaO fibers having the following composition to a heat treatment of 820 to 1300°C; and
the second step of shaping the heat-treated bio-soluble inorganic fibrous fibers and an inorganic binder to form an inorganic fibrous shaped body:

[SiO$_2$/CaO fibers]

SiO$_2$ 66 to 82 wt%
CaO 10 to 34 wt%
MgO 3 wt% or less
Al$_2$O$_3$ 5 wt% or less.

6. The method for producing an inorganic fibrous shaped body according to claim 4 or 5, wherein, in the first step, the amorphous bio-soluble inorganic fibers are subjected to a heat treatment at a temperature which is equal to or higher than the crystallization temperature of the fibers to obtain the partially-crystallized bio-soluble inorganic fibers.

7. The method for producing an inorganic fibrous shaped body according to any one of claims 4 to 6, wherein the heat-treated bio-soluble inorganic fibers comprise crystals of wollastonite, diopside or enstatite.

8. The method for producing an inorganic fibrous shaped body according to any one of claims 4 to 7, wherein the shaped body is a board of which the amount of curvature when heated at 400°C for 24 hours is 1.3 mm or less.

9. Heating equipment comprising the inorganic fibrous shaped body according to any one of claims 1 to 3.

FIG. 1

| Fibers A ($SiO_2$/CaO) | | |
|---|---|---|
| Heat treatment conditions | Dissolution velocity constant ($ng/cm^2 \cdot hr$) | Assumed half life (days) |
| Untreated | 306 | 19 |
| 800℃/24hr | 371 | 16 |
| 1000℃/24hr | 1136 | 5 |
| 1100℃/24hr | 1437 | 4 |

FIG. 2

| Fibers B ($SiO_2$/MgO) | | |
|---|---|---|
| Heat treatment conditions | Dissolution velocity constant ($ng/cm^2 \cdot hr$) | Assumed half life (days) |
| Untreated | 355 | 16 |
| 700℃/24hr | 339 | 17 |
| 800℃/24hr | 294 | 20 |
| 850℃/50hr | 27 | 219 |
| 900℃/50hr | 67 | 87 |
| 1000℃/24hr | 26 | 223 |

FIG. 3

FIG. 4

| Heating temperature at the time of measurement | Ratio of linear shrinkage by heating (%) | | |
|---|---|---|---|
| | Untreated fibers A | Heat-treated fibers A (850°C) | Heat-treated fibers A (900°C) |
| 700°C | 0.3 | 0.1 | 0.1 |
| 800°C | 0.5 | 0.3 | 0.0 |
| 900°C | 0.5 | 0.3 | 0.0 |
| 1000°C | 2.6 | 1.0 | 0.7 |
| 1100°C | 3.3 | 3.3 | 2.0 |
| 1200°C | 3.5 | 3.4 | 2.0 |
| 1260°C | 3.7 | 3.9 | 2.4 |
| 1300°C | 3.7 | 3.9 | 2.5 |

FIG. 5

| Heating temperature at the time of measurement | Amount of curvature (mm) | | | | | |
|---|---|---|---|---|---|---|
| | Untreated fibers A | Fibers A treated at 800°C for 5 min | Fibers A treated at 850°C for 5 min | Fibers A treated at 850°C for 10 min | Fibers A treated at 900°C for 5 min | Fibers A treated at 900°C for 10 min |
| 300°C | 1.0 | 0.7 | 0.5 | 0.0 | 0.0 | 0.0 |
| 400°C | 2.0 | 0.7 | 0.5 | 0.0 | 0.0 | 0.0 |
| 500°C | 2.5 | 1.0 | 1.0 | 0.0 | 0.5 | 0.0 |
| 600°C | 3.3 | 1.2 | 1.0 | 0.5 | 1.0 | 0.5 |
| 700°C | 3.0 | 2.0 | 2.1 | 1.6 | 1.9 | 1.4 |
| 800°C | 3.0 | 3.9 | 2.8 | 2.2 | 2.0 | 1.3 |
| 900°C | 1.5 | 3.1 | 1.7 | 1.6 | 1.8 | 1.8 |

FIG. 6

| Heating temperature at the time of measurement | Amount of curvature (mm) | | |
|---|---|---|---|
| | Untreated fibers B | Fibers B treated at 800°C for 5 min | Fibers B treated at 900°C for 10 min |
| 300°C | 1.0 | 0.5 | 0.0 |
| 400°C | 1.5 | 0.5 | 0.0 |
| 500°C | 3.0 | 1.1 | 0.3 |
| 600°C | 4.0 | 1.5 | 1.2 |
| 700°C | 5.0 | 2.1 | 2.0 |
| 800°C | 6.0 | 2.4 | 2.1 |
| 900°C | 8.0 | 2.2 | 1.9 |

<table>
<tr><td colspan="2">**INTERNATIONAL SEARCH REPORT**</td><td>International application No.<br>PCT/JP2011/005763</td></tr>
</table>

A. CLASSIFICATION OF SUBJECT MATTER
*C04B38/00*(2006.01)i

According to International Patent Classification (IPC) or to both national classification and IPC

B. FIELDS SEARCHED

Minimum documentation searched (classification system followed by classification symbols)
C04B38/00-38/10, C04B32/00-32/02, C03C13/00-13/06, F16L59/00-59/22,
D01F9/08-9/32

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-89913 A (Saint-Gobain TM Kabushiki Kaisha),<br>07 April 2005 (07.04.2005),<br>claims 1, 4, 6; paragraphs [0001] to [0008], [0025], [0033], [0034], [0043], [0053]; fig. 1, 2<br>(Family: none) | 1-9 |
| Y | JP 2008-518119 A (The Morgan Crucible Company PLC.),<br>29 May 2008 (29.05.2008),<br>claims 26 to 28, 48 to 50, 64, 65; paragraphs [0002], [0051], [0054], [0058], [0079], [0080], [0093]<br>& US 2006/0094583 A1 & EP 1939148 A1<br>& WO 2006/048610 A1 | 1-9 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>06 January, 2012 (06.01.12) | Date of mailing of the international search report<br>17 January, 2012 (17.01.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/005763 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2005-515307 A (Unifrax Corp.),<br>26 May 2005 (26.05.2005),<br>claims 1, 5, 13 to 15; paragraphs [0001], [0024]<br>& US 2003/0162019 A1    & EP 1463776 A1<br>& WO 2003/060016 A1 | 1-9 |
| Y | JP 2003-89547 A (Toshiba Monofurakkusu<br>Kabushiki Kaisha),<br>28 March 2003 (28.03.2003),<br>paragraphs [0001], [0002], [0038], [0044] to<br>[0046]<br>(Family: none) | 1-9 |
| Y | JP 2003-3335 A (Toshiba Monofurakkusu<br>Kabushiki Kaisha),<br>08 January 2003 (08.01.2003),<br>paragraphs [0001], [0002], [0020], [0029]<br>(Family: none) | 1-9 |
| Y | JP 2007-211963 A (Ibiden Co., Ltd.),<br>23 August 2007 (23.08.2007),<br>paragraphs [0003], [0004], [0017], [0022],<br>[0045], [0059], [0060], [0079]<br>& US 2007/0196652 A1    & EP 1818321 A2 | 1-9 |
| Y | JP 2007-197870 A (Nichias Corp.),<br>09 August 2007 (09.08.2007),<br>claims 1, 5; paragraphs [0001], [0029], [0063]<br>(Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008162853 A